Europäisches Patentamt

European Patent Office

Office européen des brevets

(19)

(11) Publication number: **0 379 279**
**A2**

# (12) EUROPEAN PATENT APPLICATION

(21) Application number: **90300149.3**

(22) Date of filing: **05.01.90**

(51) Int. Cl.⁵: **H04L 7/033, H04J 3/06**

The references to Fig. 12 are deemed to be deleted (Rule 43 EPC).

(30) Priority: **17.01.89 US 297689**

(43) Date of publication of application:
**25.07.90 Bulletin 90/30**

(84) Designated Contracting States:
**DE GB NL**

(71) Applicant: **MARCONI INSTRUMENTS LIMITED**
**Longacres Hatfield Road**
**St. Albans Hertfordshire, AL4 0JN(GB)**

(72) Inventor: **Murray, Joseph**
**5201 E. Beck Lane**
**Scottsdale Arizona 85254(US)**
Inventor: **Newey, Roger**
**7777 E. Main Street**
**No. 366 Scottsdale Arizona 85251(US)**
Inventor: **Robinson, Irwin Jacob, III**
**3136 S. Orange Circle**
**Mesa Arizona 85210(US)**

(74) Representative: **MacKenzie, Ian Alastair**
**Robert**
**The General Electric Company, p.l.c. Central**
**Patent Department Wembley Office Hirst**
**Research Center East Lane**
**Wembley Middlesex HA9 7PP(GB)**

(54) **Data transmission synchroniser.**

(57) The invention concerns a data transmission synchroniser for transferring data from a source to a reception unit, the source and reception unit being asynchronous with respect to another one. The synchroniser comprises: a sequence of registers (12 -- 15) through which said data to be transferred is sequentially passed; means for reading the data out of the first of said registers (12) and into the second of said sequence of registers utilising a first clock signal (16) asynchronous with respect to said reception unit; clock signal generating means for generating an intermediate clock signal (17) for reading the data out of said second register (13), the intermediate clock signal (17) being more nearly in synchronisation with said reception unit than said data source; and means for reading data out of the final register (13) of said sequence with a clock signal (19) in synchronism with said reception unit. Preferably the sequence of registers (12 -- 15) includes a plurality of intermediate registers (13, 14) between said first register and said final register, and said clock signal generating means are operative to generate a sequence of intermediate clock signals (17, 18) for each of said respective intermediate registers.

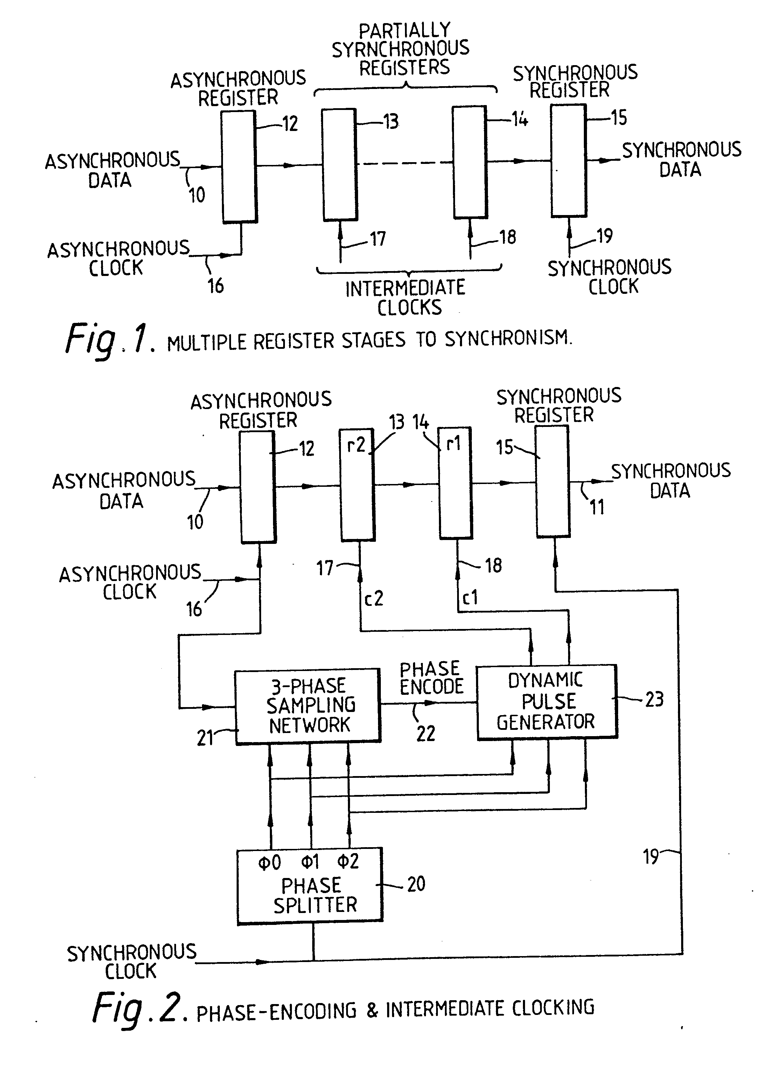

Fig.1. MULTIPLE REGISTER STAGES TO SYNCHRONISM.

## DATA TRANSMISSION SYNCHRONISER

The present invention concerns a synchroniser for use in the transfer of digital data. In many applications such as communications or logic analysis it is necessary to transfer data between two systems, each of which operates on an autonomous timebase. The timebases may differ in both phase and frequency. Thus each system is effectively asynchronous with regard to the other. Accordingly in order to transfer the data successfully it is necessary to transform the data from one timebase to another.

This process, usually referred to as synchronisation, involves attributing each word emanating from the first system to a particular sychronous clock interval such that no two words are attributed to the same interval. Thus no data is lost because 1) all of the data bits in a particular data word are attributed to the same interval and 2) no words are lost because each word is guaranteed a unique interval.

An important property of any synchroniser is bandwith or throughput.

Accordingly an object of the present invention is to provide a synchroniser which can operate at a maximum throughput equal to the clock rate of the synchroniser. Another object is to provide a synchroniser which posesses the ability to synchronise data, at any phase and at any rate less than or equal to the clock rate of the synchroniser. A still further object is to provide a synchroniser with the ability to synchronise data words of arbitrary width without loss or corruption of any bit of the word.

The invention should become more apparent from the following detailed description when taken in conjunction with the accompanying drawings, in which:

Figure 1 is a block diagram showing the basic priniciple of the invention;

Figure 2 is a block diagram of an embodiment of a data transmission synchroniser according to the present invention;

Figure 3 shows a sequence of synchonisation timing diagrams;

Figure 4 is a block diagram of a 3-phase sampling network;

Figure 5 shows another sequence of timing diagrams;

Figure 6 is a timing diagram illustrating the operation of anti-jitter circuitry;

Figure 7 is a block diagram of part of a dynamic clock generator for generating one train of pulses used in the embodiment of Figure 2;

Figure 8 is a block diagram of the part of the dynamic clock generator for generating a second train of pulses used in the embodiment of Figure 2;

Figure 9 is a truth table;

Figure 10 is a block diagram of a modification to the embodiment of Figure 1.

Figure 11 is a block diagram of a further embodiment of a data transmission synchroniser according to the invention, and

Figure 12 illustrates possible timing diagrams of the operation of the embodiment of Figure 11.

Referring now to the drawings Figure 1 shows a data path 10 leading from a data source (not shown) which is transmitting digital words and which has an autonomous timebase. Data on path 10 has to be transferred via a path 11 to a data reception unit (not shown) also having an autonomous timebase. The two time bases may vary both in frequency and phase relative to one another so that the outgoing data on lines 10 are effectively asynchronous with respect to the time base of the reception unit. In accordance with the invention the outgoing data are brought into synchronisation with the second timebase by being passed through a sequence of registers which are clocked at different times. In Figure 1 four such registers 12, 13, 14 and 15 are shown. As already stated the problem of synchronising the data on path 10 with the second timebase involves attributing each asynchronous word to a particular synchronous time interval such that no two words are attributed to the same time interval.

In passing through the sequence of register stages 12 -15 the initially asynchronous data are brought closer and closer into synchronism with the second time base until exact synchronism is reached. Thus register 12 is an asynchronous register and the data are clocked through register 12 by an asynchronous clock signal on a line 16. Registers 13 and 14 are similarly clocked by intermediate clock signals on lines 17 and 18 respectively, the intermediate clock signals being progressively closer in synchronisation to a clock signal on line 19 which clocks synchronous register 15. This clock signal is in synchronisation with the second timebase.

The process of synchronisation is thus one of multiple stages of successive approximation to synchronism. It is also necessary in the carrying out of these multiple approximations for the clock timings for the intermediate stages to be computed dynamically from the phase of the asynchronous clock. To accomplish this the asynchronous clock of the first system is sampled by a synchronous poly-phase sampling network. This is the arrangement shown in Figure 2 of the accompanying drawings. The network shown in this figure provides outputs in which is encoded the phase relationship of the asynchronous clock with respect to the synchronous clock. This phase information is sufficient to determine the optimum phase positions for the clock pulses for each of the intermediate synchronising register stages; in the embodiment the stages 13 and 14. The Figure 2 embodiment uses a 3-phase implementation but it will be appreciated that the number of phases can be varied without departing from the essential principles of the invention.

Referring now specifically to Figure 2 it can be seen that the synchronous clock on line 19 is also supplied to a phase splitter 20 having three outputs $\phi$, $\phi 1$ and $\phi 2$ which are phase shifted in respect of each other. These outputs are supplied to a 3 - phase sampling network 21 which will be described in greater detail hereinafter. The sampling network 21 samples the asynchronous clock signal on line 16 and gives an output on phase encoded lines 22 to a dynamic pulse generator 23 which also receives the three signals $\phi 0$, $\phi 1$ and $\phi 2$. The outputs of dynamic pulse generator 23 are clock signals C2 and C1 for the two intermediate registers 13 and 14. As mentioned before the intermediate clock signals $C_2$ and $C_1$ are produced dynamically so that the phase of these signals is crucial to the operation of the synchroniser as a whole. The decision as to the correct phase of $C_2$ and $C_1$ is determined by some preset rules. Consider, for example, $C_2$ and assume the synchronised clock period to be P seconds and the asynchronous clock period to be at least P seconds.

1) $C_2$ must occur before the next allowable asynchronous clock (i.e. no more than P seconds following the asynchronous clock). If this rule is violated then the data word in the asynchronous register may be overwritten by the next data word before it has been copied into register 13.

2) $C_2$ must not occur before the data has had time to propagate through the asynchronous register and to be setup at register 13. Similary for $C_1$;

3) $C_1$ must occur before the next allowable $C_2$ (i.e. no more than P seconds following $C_2$). If this rule is violated then the data word in register 13 may be overwritten by the next data word before it has been copied into register 14.

4) $C_1$ must not occur before the data has had time to propagate through register 13 and to be setup at register 14.

5) The time between $C_1$ and the next synchronous clock must be greater than the propagation time from $C_1$ to the input of the synchronous register. If this rule is violated then the data word in register 14 will fail to copy to the synchronous register 15.

The synchronizer obeys these rules by ensuring clock separations of no less than 2/3 P seconds and no more than P seconds between the three clock pairs: asynchronous /$C_2$; $C_2$/$C_1$; and $C_1$/synchronous. It can be seen that this provides 2/3 P seconds to be used in register stage propagation and register setup times.

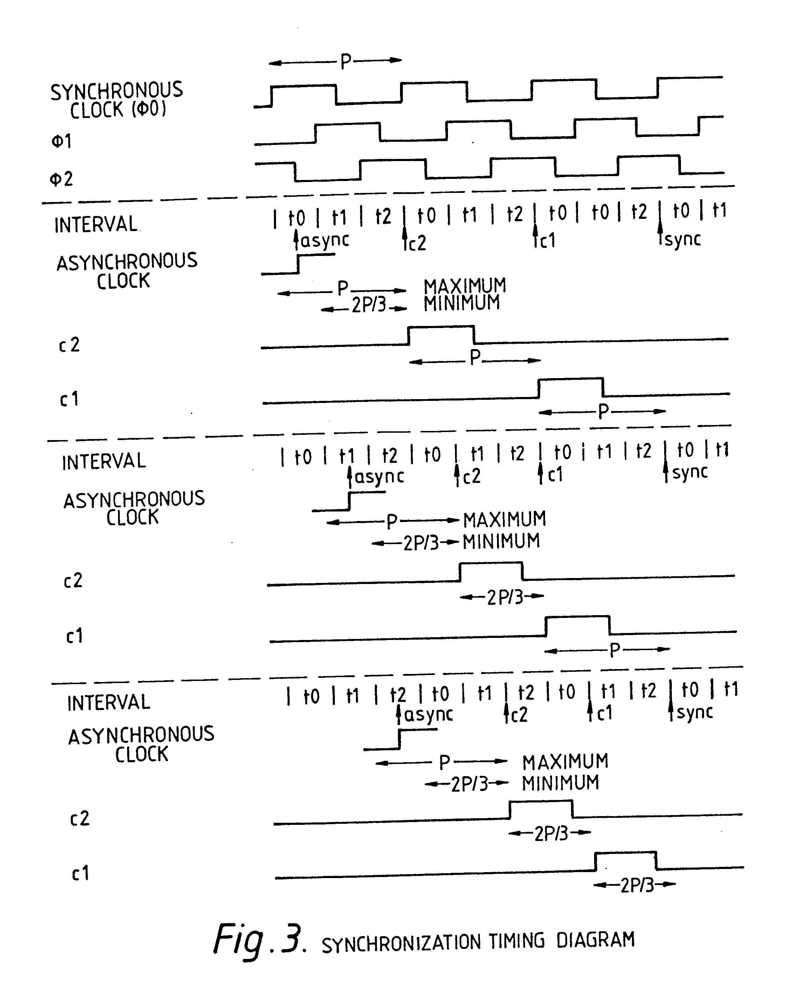

The way in which this is accomplished is depicted in the timing diagram of Figure 3. This figure shows each of the three possible timing scenarios with the asynchronous clock arriving at time intervals t0, t1 and t2. The time interval t0 is that time between $\phi 0$ rising and $\phi 1$ rising; t1 is that time between $\phi 1$ rising and $\phi 2$ rising; t2 is that time between $\phi 2$ rising and $\phi 0$ rising.

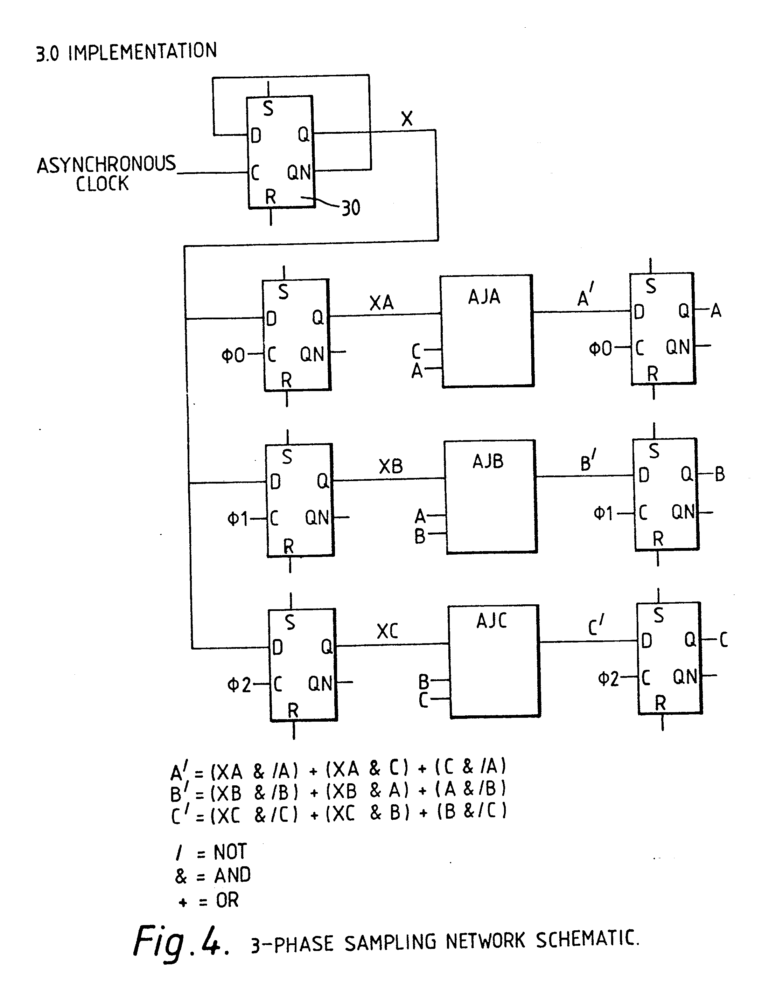

The way in which the 3-phase sampling network operates to control the generation of the intermediate clock signals will now be described with reference to Figure 4 of the accompanying drawings which is a block diagram of the 3-phase sampling circuit 21 first shown in Figure 2. In this sampling network the asynchronous clock signal is fed via line 10 into a first flip-flop 30 which merely divides the asynchronous clock signal by 2 so that an "X" signal is produced such that for each asynchronous clock which occurs a transition will occur on the signal "X". Signal "X" is taken to a two-stage synchroniser the first stage of which is comprised by flip-flops XA, XB and XC and the second stage of flip-flops A, B, C. The second stage is clocked one synchronous clock period after the first stage. This allows a one-clock settling period (P seconds) for any meta-stabilities which might occur in the first stage.

The first stage of a synchroniser can commonly go metastable if the input transitions coincidentally with the synchronising clock. The longer the settling period which is allowed, the lower the probability that a metastability will propagate to the second stage. If a metastability should propogate to the second stage, then a circuit malfunction may occur. The choice of settling period is therefore a tradeoff between reliability and circuit response time.

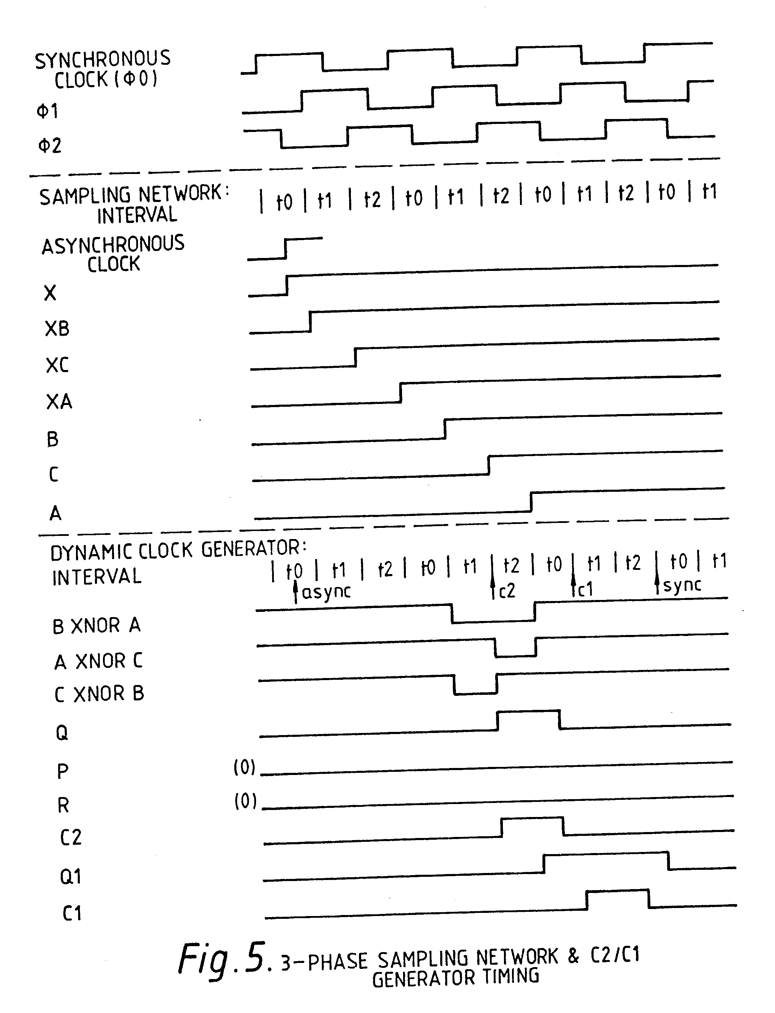

The synchronizer samples signal "X" at each of the three phase points $\phi 0$, $\phi 1$ and $\phi 2$. When an asynchronous clock occurs, "X" transitions, causing a transition to ripple through the flip-flops of the first-stage. Then a transition will ripple through the flip-flops of the second-stage as shown in the timing diagram of figure 5.

The three blocks of logic AJA, AJB and AJC constitute 'anti-jitter' logic. Consider the case of two successive asynchronous clocks arriving approximately P seconds apart, and both coincident with either $\phi 0$, $\phi 1$ or $\phi 2$. Because the asynchronous clocks are both coincident with the synchronous phase clock, then for each there is an uncertainty as to which time interval will recognise it.

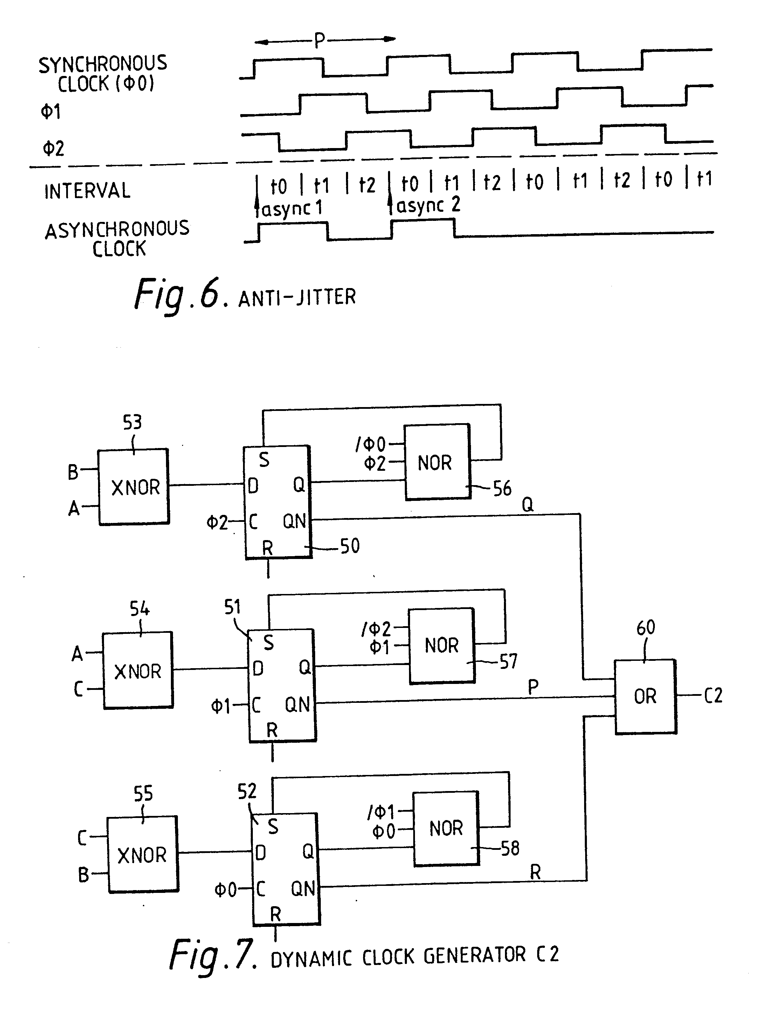

This is the situation shown in Figure 6.

It is possible that the first asynchronous clock could be recognised in time interval t0 while the second in time interval t2. These two clocks would therefore be considered to be 2P/3 seconds apart due to the quantizing errors introduced by the first-stage of the synchronizer. Referring back to figure 3, it can be seen that the data for both of these clocks would be synchronised to the same synchronous clock interval thus resulting in a loss of data by overwriting.

The purpose of the anti-jitter logic is to prevent transitions from occurring, or appearing to occur, closer together than P seconds. Take as an example anti-jitter logic circuit AJA:

$$A' = (XA \ \& \ /A) + (XA \ \& \ C) + (C \ \& \ /A)$$

Therefore:

If A is 0: $A' = XA + C$

If C is also 0 then there has been no prior transition which has not yet rippled to the A register, and so:

$$A' = XA + 0 - XA$$

But if C is 1, then the prior transition has not yet rippled to the A register (else A would also be 1), so ignore the value of XA and ripple the prior transition to A.

So:

$$A' = XA + 1 = 1$$

Likewise, if A is 1: $A' = XA \ \& \ C$

If C is also 1 then there has been no prior transition which has not yet rippled to the A register, and so:

$$A' = XA \ \& \ 1 = XA$$

But if C is 0, then the prior transition has not yet rippled to the A register (else A would also be 0), so ignore the value of XA and ripple the prior transition to A.

So:

$$A' = XA \ \& \ 0 = 0$$

It will be appreciated that anti-jitter logic circuitry AJB and AJC operate in exactly the same way as circuit AJA.

Referring now to Figure 7 of the drawings this shows in greater detail the part of dynamic pulse generator 23 for generating the C2 intermediate clock signal. Basically the circuit comprises three similar circuits Q, P, R, one for each of the three possible phase positions of the C2 clock. The timing diagram of Figure 5 gives one example of how the dynamic pulse generator 23 operates. In this case it is the flip-flop 50 of circuit Q which is required to produce the C2 output at $\phi 2$.

In each of the circuits P, Q and R the respective flip-flops 50, 51 and 52 have their D inputs connected to the output of one of three exclusive - NOR gates 53, 54 and 55. Each of these gates receives at its two inputs a pair of the three signals A, B and C from the sampling network 21.

The "Q" output of each of flip-flops 50, 51, 52 is connected to one input of one of three respective NOR gates 56, 57, 58. Each of these NOR gates has two other inputs to which are respective connected pairs of the three signals $\phi 0$, $\phi 1$, $\phi 2$ and their inverses.

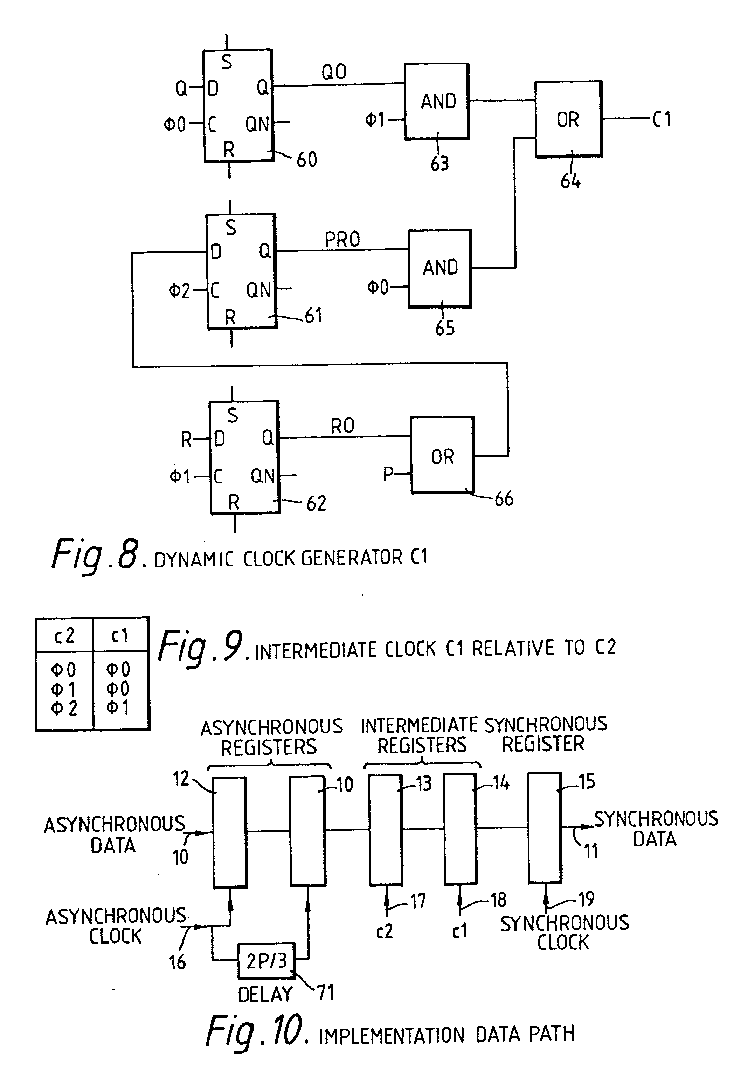

Each exclusive NOR gate and its associated circuit elements acts as a transition detector. Thus the Q circuit is arranged to detect transitions which originated at time $\phi 1$ because in this case the signal B will differ from signal A when it is clocked at time $\phi 2$. Similarly the "P" circuit detects transitions which originated at time $\phi 0$ and the "R" circuit detects those which originated at time $\phi 2$. Thus the three detector circuits P, Q and R decode the phase position of the transition and hence the phase position of the asynchonous clock because the transition was directly caused by the asynchonous clock. When the phase position of the asynchonous clock has been detected a C2 pulse is generated at the optimum phase for data synchronisation as the outputs of each of the flip-flops 50, 51 and 52 are taken to a single NOR-gate 60. The a detector circuit generates a C2 clock pulse at time $\phi 2$, the P detector circuit a C2 clock pulse at time $\phi 1$ and the R detector circit at $\phi 0$. The part of dynamic pulse generator circuit of Figure 2 for generating intermediate clock signal C1 is shown in greater detail in Figure 8. As can be seen, this circuit also includes three flip-flops. These are numbered 60, 61 and 62 with flip-flop 60 having $\phi 0$ at one input and Q at its other. The output signal Q0 of flip-flop 60 is taken to one input of an AND-gate 63 the other input of which is $\phi 1$ and the output of AND-gate 63 is supplied to an OR-gate 64. The other input to OR-gate 64 is supplied by the output of an AND-gate 65 which receives the $\phi 0$ signal and an output of flip-flop 61. Flip-flop 61 takes one input from an OR-gate 66 and its other input is $\phi 2$. OR-gate 66 has one input P and its other its other the output of flip-flop 62, the two inputs to the latter flip-flop being R and $\phi 1$.

From the timing diagram of Figure 3 it can be seen that if C2 is generated at either $\phi 0$ or $\phi 1$ then C1 should be generated at $\phi 0$ else at $\phi 1$. This arrangement is more clearly shown in the table of Figure 9 of the drawings which illustrates the intermediate clock C1 relative to C2.

Figure 8 achieves this by the flip-flop 62 detecting the presence of R in the C2 generator. The flip-flop 61 detects the presence of C2 at either $\phi 0$ or $\phi 1$ by detecting the presence of P in the C2 generator or the presence of RO. The signal PRO then enables a pulse to C1 at $\phi 0$.

Finally the flip-flop 60 detects the presence of C2 at $\phi 2$ by detecting the presence of Q in the C2 generator. This latter flip-flop then enables a pulse to C1 at $\phi 1$.

Referring back to the timing diagram of Figure 5 it can be seen that the C2 clock is generated 2P/3 seconds later than the ideal model in Figure 3. This is due to the aforementioned metastability settling time in the 2-stage synchroniser (P seconds). Reducing the settling time to P/3 seconds would result in C2 being generated at the ideal time. This is an acceptable solution in low performance applications where P is large enough to afford acceptable reliability with a settling time of P/3 seconds.

In high performance applications where this is not so a different solution can be adopted. An additional asynchronous data register is added to the data path. This is the arrangement shown in Figure 10 of the accompanying drawings. This additional register is shown at 70 and is clocked 2P/3 seconds following the asynchronous clock. This is achieved by introducing a 2P/3 delay circuit 71 into the asynchronous clock line.

It will be appreciated that the foregoing description has been directed to a three stage synchonising circuit. However it will be apparent that more than three stages can be used if this is made necessary by operational requirements. The basic principles behind the generation of the intermediate clock trains can be extended to encompass more than two intermediate registers.

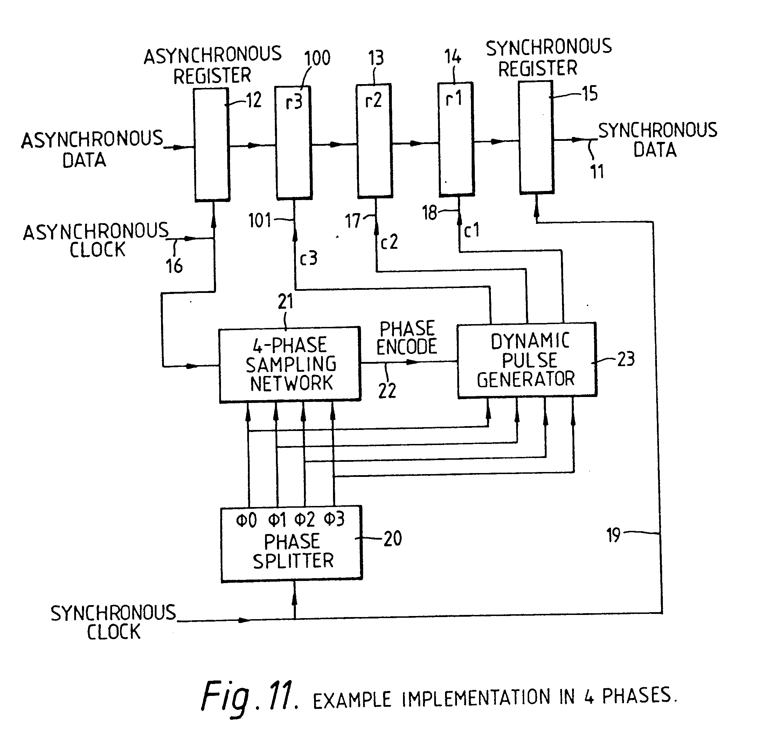

Thus figure 11 shows a four phase synchronising circuit. Integers in this circuit which are common to the circuit of Figure 2 have been given the same reference numerals. However in this embodiment phase splitter 20 provides four outputs $\phi 1$, $\phi 2$, $\phi 3$ and $\phi 4$ to a four-phase sampling network 21 and to dynamic pulse generator 23. Three intermediate clock signals C1, C2 and C3 are generated and there is an additional intermediate register shown at 100.

Figure 12 of the drawings shows at A four phases of the synchronising clock and at B four possible timing scenarios.

Whilst figure 11 shows an example of a 4-phase implementation and figure 12 shows the four possible timing scenarios for this case, the rules for the general case of 'n' phases (where n is greater than or equal to 2) are set out below:-

let n be The number of phases.
let P be The synchronising clock period stated in degrees.
let S be The number of intermediate register stages.
let x be An integer number.
let R (x) be The intermediate register for stage x (for: $1 <= x <= S$).
let C (x) be The position of the intermediate clock for R (x) stated in degrees.
let 0 (x) be The position of phase clock x (for: $0 <= x < n$) stated in degrees.
let A be The position of the asynchronous clock stated in degrees (for: $0 <= A < 360$).

let y,z be Real numbers.
let div (y,z) be A function yielding a real number equal to, the integer part of y/z
let mod (y,z) be A function yielding a real number equal to, the remainder of y/z.
Then:
P = 360
S = n - 1
The least synchronous intermediate register = R (S)
The most synchronous intermediate register = R (1)
$\phi$ (x) = (x) P/n, (x + n) P/n,(x + 2n)P/n (x + 3n) P/n etc.
($\phi$(x) is recurring at intervals of P)
For (x equal to S):
C(x) = (div(A, P/n))P/n + P
For (x not equal to S) and (mod(C(x + 1), P) equal to 0):
C(x) = C(x + 1) + P
For (x not equal to S) and (mod(C(x + 1), P) not equal to 0):
C(x) = C(x + 1) + P - P/n

## Claims

1. A data transmission synchroniser for transferring data from a source to a reception unit, the source and reception unit being asynchronous with respect to one another, the synchroniser being characterised in that it comprises: a sequence of registers (12 --15) through which said data to be transferred is sequentially passed; means for reading the data out of the first of said registers (12) and into the second of said sequence of registers utilising a first clock signal (16) asynchronous with respect to said reception unit; clock signal generating means for generating an intermediate clock signal (17) for reading the data out of said second register (13), the intermediate clock signal (17) being more nearly in synchronisation with said reception unit than said data source; and means for reading data out of the final register (13) of said sequence with a clock signal (19) in synchronism with said reception unit.

2. A synchroniser as claimed in Claim 1, and characterised in that said sequence of registers (12 -- 15) includes a plurality of intermediate registers (13, 14) between said first register and said final register, and said clock signal generating means are operative to generate a sequence of intermediate clock signals (17, 18) for each of said respective intermediate registers.

3. A synchroniser as claimed in Claim 2, and characterised in that said clock signal generating means comprises: means (20) for phase splitting said synchronous clock into a plurality of signals of different phase; and a phase sampling network (21) for sampling said first clock signal under the control of said different phase signals.

4. A synchroniser as claimed in Claim 3, and further characterised in that it comprises a dynamic pulse generator (23) connected to the output of said phase sampling network (21) and operative to generate said intermediate clock signals.

5. A synchroniser as claimed in Claim 4, and further characterised in that said sampling network (21), comprises; a two stage synchroniser, each of said stages comprising flip-flops (XA, XB, XC, A, B, C), and means for clocking each of said stages such that the second stage is clocked one synchronous clock period after said first stage for preventing the propagation of metastabilities from one stage to the other.

6. A synchroniser as claimed in Claim 5, and further characterised in that it includes anti-jitter logic means (AJA, AJB, AJC) connected between said stages for preventing the loss of data by overwriting which may be caused by quantizing errors in the first stage.

Fig.1. MULTIPLE REGISTER STAGES TO SYNCHRONISM.

Fig.2. PHASE-ENCODING & INTERMEDIATE CLOCKING

Fig. 3. SYNCHRONIZATION TIMING DIAGRAM

3.0 IMPLEMENTATION

$A' = (XA \ \& \ /A) + (XA \ \& \ C) + (C \ \& \ /A)$
$B' = (XB \ \& \ /B) + (XB \ \& \ A) + (A \ \& \ /B)$
$C' = (XC \ \& \ /C) + (XC \ \& \ B) + (B \ \& \ /C)$

$/$ = NOT
$\&$ = AND
$+$ = OR

*Fig.4.* 3-PHASE SAMPLING NETWORK SCHEMATIC.

Fig.5. 3-PHASE SAMPLING NETWORK & C2/C1 GENERATOR TIMING

*Fig.6.* ANTI-JITTER

*Fig.7.* DYNAMIC CLOCK GENERATOR C 2

Fig.8. DYNAMIC CLOCK GENERATOR C1

| c2 | c1 |
|----|----|
| Φ0 | Φ0 |
| Φ1 | Φ0 |
| Φ2 | Φ1 |

Fig.9. INTERMEDIATE CLOCK C1 RELATIVE TO C2

Fig.10. IMPLEMENTATION DATA PATH

*Fig.11.* EXAMPLE IMPLEMENTATION IN 4 PHASES.